Europäisches Patentamt

European Patent Office

Office européen des brevets

(11) Veröffentlichungsnummer: **0 150 814**
**B1**

(12) **EUROPÄISCHE PATENTSCHRIFT**

(45) Veröffentlichungstag der Patentschrift:
**07.12.88**

(51) Int. Cl.⁴: **H 02 H 3/40**

(21) Anmeldenummer: **85100711.2**

(22) Anmeldetag: **24.01.85**

(54) **Digitales Impedanzrelais.**

(30) Priorität: **01.02.84  SE 8400499**

(43) Veröffentlichungstag der Anmeldung:
**07.08.85 Patentblatt 85/32**

(45) Bekanntmachung des Hinweises auf die Patenterteilung:
**07.12.88 Patentblatt 88/49**

(84) Benannte Vertragsstaaten:
**CH DE FR GB IT LI**

(56) Entgegenhaltungen:
**DE-A- 2 022 150**
**GB-A- 2 055 518**

**(ASEA)**

(73) Patentinhaber: **ASEA AB, S-721 83 Västeras (SE)**

(72) Erfinder: **Brandt, Nils, Billstabagen 15, S-722 40 Västeras (SE)**

(74) Vertreter: **Boecker, Joachim, Dr.-Ing., Rathenauplatz 2-8, D-6000 Frankfurt a.M. 1 (DE)**

**Beschreibung**

Die vorliegende Erfindung betrifft ein digitales Impedanzrelais.

Insbesondere zum Schutz von Freileitungen, Kabeln, Sammelschienen usw., aber auch von Transformatoren, Generatoren usw., bei Kurzschluss und Erdschluss werden oft Impedanzrelais verwendet. Ein Impedanzrelais arbeitet in Abhängigkeit des in einem bestimmten Punkte gemessenen Quotienten aus Spannung und Strom, also der Impedanz. Da die Impedanz einer Starkstromleitung direkt proportional der Länge der Leitung ist, wird häufig auch die Bezeichnung Distanzschutz anstelle von Impedanzschutz verwendet.

Solche Schutzrelais haben neben der Einrichtung zur Messung der Impedanz in der Regel weitere Eigenschaften, welche die Schutzwirkung erhöhen. Hierbei kann es sich einerseits um Einrichtungen zur Erfassung von Richtung und Reichweite handeln, und andererseits können sie als Starteinrichtung für Überstromrelais, in Relais mit absoluter Selektivität, in Relais gegen Pendelungen in Netzen usw. verwendet werden.

Dass ein Schutzrelais Richtungseigenschaften hat, bedeutet, dass man in bezug auf den Messpunkt eine davorliegende und eine dahinterliegende Schutzrichtung definiert und dass das Schutzrelais zu erkennen vermag, ob es sich um einen davor- oder dahinterliegenden Fehler handelt. Die Reichweiteneigenschaft bedeutet, dass man einstellen kann, wie weit vom Messpunkt entfernt die Schutzwirkung reicht.

Grundsätzlich arbeitet ein Impedanzschutz in der Weise, dass die in Messpunkt gemessene Impedanz mit einem eingestellten Impedanzwert verglichen wird und dass der Impedanzschutz anspricht, wenn die gemessene Impedanz den eingestellten Wert unterschreitet. Die eingestellte Impedanz kann eine Modellimpedanz $Z_M$ sein.

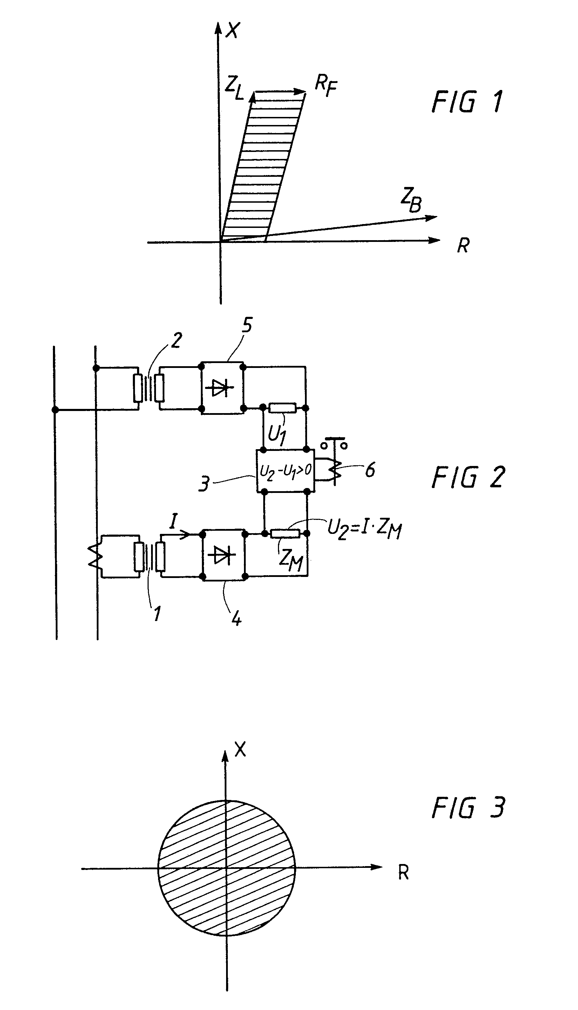

Das Kriterium für das Ansprechen wird mit Hilfe der Funktionskurve (Ortskurve) des Impedanzschutzes in der RX-Ebene definiert. Figur 1 zeigt die Verhältnisse in der RX-Ebene bei fehlerfreiem Betrieb. Die gerade vorliegende Lastimpedanz $Z_B$ ist die resultierende Impedanz sämtlicher an das Netz angeschlossener Lastimpedanzen zuzüglich der Leitungsimpedanz. Das Argument (Winkel gegenüber der reellen Achse) für $Z_B$ liegt normalerweise zwischen $\pm 30$ Grad.

Der Vektor $Z_L$ beschreibt die Leitungsimpedanz einer Starkstromleitung bei einem direkten Erdschluss, wobei der Übergangswiderstand zwischen Leitung und Erde vernachlässigt ist. In der Regel hat die Fehlerstelle jedoch einen gewissen Übergangswirkwiderstand, der in Figur 1 durch den Vektor $R_F$ dargestellt ist und der in der Regel aus dem Lichtbogenwirkwiderstand und dem Masterdungswirkwiderstand besteht.

Wenn die gemessene Impedanz innerhalb des schraffiert dargestellten Bereiches liegt, dann liegt ein Fehler vor, der behoben werden muss. Dies setzt voraus, dass der Impedanzschutz zwischen der Lastimpedanz und der Fehlerimpedanz unterscheiden kann. Wie Figur 1 zeigt, kann die Lastimpedanz $Z_B$ bei geringer Belastung des Netzes innerhalb des Ansprechbereiches des Impedanzschutzes liegen.

Bei solchen Schutzrelais ist man an sich nicht daran interessiert, ein Mass für die Impedanz zu gewinnen, d.h. den Quotienten aus Spannung und Strom im Messpunkt zu bilden. Daher wird die Bildung des Kriteriums und die Ansprechforderung in ein einfacheres Differenzverfahren übergeführt. Dieses Verfahren wird nachstehend anhand von Figur 2 beschrieben. Dabei ist $U_1$ eine Spannung, die der Spannung im Messpunkt proportional ist, und I ist ein Strom, der dem Strom im Messpunkt proportional ist. Die bisher gestellte Forderung für ein Ansprechen bedeutet, dass, wenn

$$\frac{U_1}{I} < Z_M,$$

das Impedanzrelais eine Massnahme anzeigen soll. Eine Umformung der Ungleichung ergibt

$$O < IZ_M - U_1.$$

Bei geeigneter Dimensionierung des Stromtransformators 1, der Impedanz $Z_M$ und des Spannungstransformators 2 in Figur 2 kann diese die Ungleichung mit Hilfe der Gleichrichter 4 und 5 durch den Nulldetektor 3 mit Nullerfassung verwirklicht werden. Wenn man $U_2 = IZ_M$ setzt, soll somit eine Massnahme, beispielsweise durch das Relais 6 angezeigt werden, wenn $U_2 - U_1 > 0$ ist.

Das Auslösekriterium gemäss dieser Ungleichung und mit der gezeigten Art, Strom und Spannung zu messen, ergibt eine Funktionskurve gemäss Figur 3, d.h. eine Auslösung für alle Impedanzen innerhalb der schraffierten Kreisfläche. Dieser Bereich stimmt nicht besonders gut überein mit dem Wunsch nach einem Überdeckungsbereich gemäss der schraffierten Fläche in Figur 1. Durch verschiedene mehr oder weniger komplizierte Kompensationsschaltungen kann man den Messbereich jedoch so beeinflussen, dass er den besonderen und manchmal unterschiedlichen Forderungen angepasst werden kann, die beispielsweise für Freileitungen und Kabel gestellt werden.

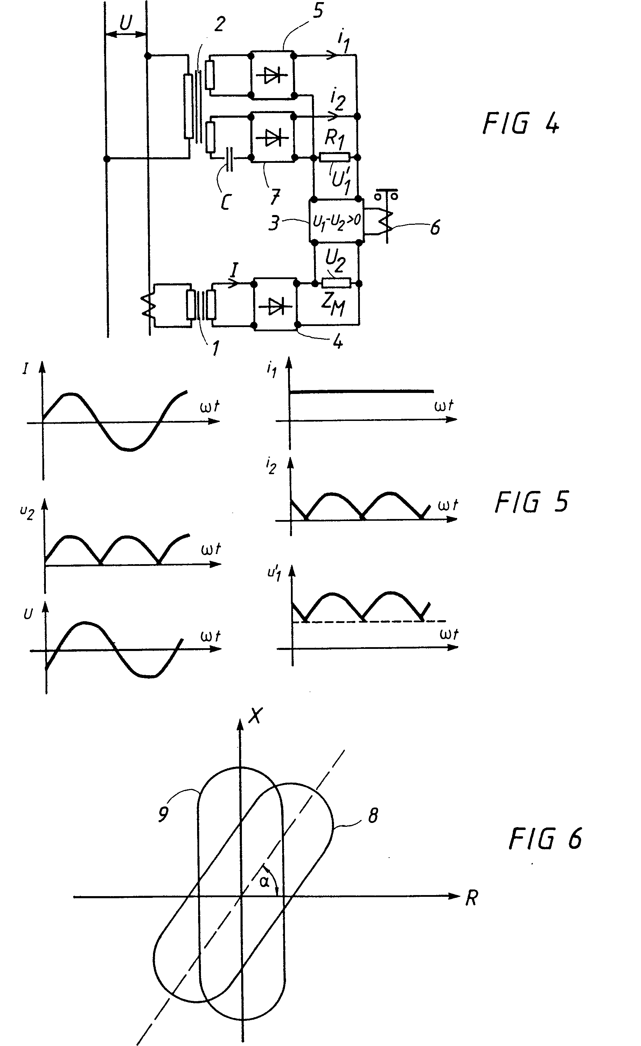

Ein Impedanzrelais mit statischen Bauteilen, das auf dem oben beschriebenen Erfassungsprinzip basiert und mit Kompensationsschaltungen zur Anpassung des Messbereiches versehen ist, ist aus der DE-A-20 22 150 bekannt. Dieser Impedanzschutz ist in bekannter analoger Technik aufgebaut. Figur 4 zeigt eine vereinfachte Darstellung der Anordnung nach Figur 1 der genannten DE-A-20 22 150. Wie daraus hervorgeht, wird dem gleichgerichteten Spannungssignal $U_1$ in Figur 2 eine durch den Kondensator C und den Gleichrichter 7 etwas phasenverschobene Spannung überlagert. In Figur 5 sind die aktuellen Strom- und Spannungskurven für die Schaltung nach Figur 4 als Funktion des Winkels $\omega t$ dargestellt. Der Strom $i_1$ durch den Gleichrichter 5 ist, wie aus der DE-A-20 22 150 hervorgeht, ein geglätteter sechspulsiger Gleichstrom. Der Strom $i_2$ ist ein gegenüber der Spannung U phasenverschobener ungeglätteter Gleichstrom. $U_1'$ ist der am Widerstand $R_1$ durch die Ströme $i_1$ und $i_2$ verursachte Spannungsfall. Die Funktionskurve des Impedanzrelais verläuft oval, wie es die Kurve 8 in Figur 6 zeigt. Der Winkel Alfa ($\alpha$) wird vom Wert des Kondensators C bestimmt. Bei kurzgeschlossenem Kondensator gilt die Ortskurve 9 in Figur 6.

Es ist bekannt, dass beim Anlegen einer Wechselspannung an eine Impedanz, zum Beispiel an einen Transformator oder eine leerlaufende Leitung, abhängig vom Einschaltaugenblick, also der Phasenlage der Spannung, sich dem stationären Wechselfluss ein magnetischer Gleichfluss als Ausgleichsfluss überlagert. Im ungünstigsten Falle, also beim Einschalten beim Nulldurchgang der Spannung, hat der Ausgleichsfluss im ersten Augenblick die Grösse des Spitzenwertes des stationären Wechselflusses. In der Praxis kann dies bedeuten, dass der Einschaltstromstoss beim Einschalten eines Transformators auf der Hochspannungsseite fünf bis zehnmal so gross wie der Spitzenwert (Amplitude) des Nennstromes werden kann. Beim Einschalten auf der Niederspannungsseite kann der Einschaltstrom sogar das zehn- bis zwanzigfache der Amplitude des Nennstromes erreichen. Bei Schutzeinrichtungen mit Impedanzrelais, Differentialrelais usw. ist es daher notwendig, dass zwischen Einschaltströmen und Kurzschlussströmen unterschieden wird. Die Relais müssen gegen Einschaltströme «stabilisiert» sein. Für diese Stabilisierung wird von einem charakteristischen Unterschied zwischen dem Einschaltstrom und dem Kurzschlussstrom Gebrauch gemacht. Ein sehr markanter Unterschied besteht darin, dass der Einschaltstrom in starkem Masse geradzahlige Oberwellen enthält, insbesondere die zweite Oberwelle.

Die bekannten statischen Relais sind – wie beispielsweise in der DE-A-20 22 150 beschrieben – aus verhältnismässig vielen Bauteilen aufgebaut. Ihr Platzbedarf ist daher verhältnismässig gross. Die zu den Impedanzschutzeinrichtungen gehörenden analogen Filter sind hinsichtlich ihrer Selektivität und Schnelligkeit begrenzt. Die Einstellung der gewünschten Schutzfunktionscharakteristik kann aufgrund der Frequenzabhängigkeit der zugehörigen Bauteile usw. schwierig werden.

Aus der GB-A-2 055 518 ist bereits ein digitales Impedanzrelais bekannt, bei welchem die Strom- und Spannungswerte des zu überwachenden Netzes in digitalisierter Form gewonnen werden. Das Prinzip, nach dem diese digitalen Werte verarbeitet werden, ist von der Verarbeitung der analogen Werte beim Impedanzrelais der DE-A-20 22 150 jedoch sehr verschieden.

Der Erfindung liegt die Aufgabe zugrunde, ein Impedanzrelais in digitaler Bauweise zu entwikkeln, welches im Prinzip die gleichen Funktionseigenschaften wie das oben erläuterte analoge Impedanzrelais hat.

Zur Lösung dieser Aufgabe wird ein digitales Impedanzrelais gemäss der Merkmalskombination des Anspruches 1 vorgeschlagen.

Vorteilhafte Ausgestaltungen der Erfindung sind in den weiteren Ansprüchen genannt.

Bei der Erfindung handelt es sich um eine Anordnung zur digitalen Erfassung einer Unterimpedanz. Durch die Digitalisierung wird erreicht:
- ein schnelleres und besseres Messen von Spannungen und Strömen
- schnellere und bessere Filterung der gewünschten Grössen
- bessere und einfachere Einstellung des Schutzfunktionsbereiches
- eine wesentliche Reduzierung des Platzbedarfes
- geringere Herstellungskosten.

Anhand der Figuren soll die Erfindung näher beschrieben werden. Es zeigen

Figur 1 einen gewünschten Ansprechbereich für das Impedanzrelais, dargestellt in der RX-Ebene,

Figur 2 eine Schaltung zur Erläuterung der prinzipiellen Arbeitsweise des Impedanzrelais,

Figur 3 eine kreisförmige Ansprechcharakteristik,

Figur 4 eine Schaltung zur Erzeugung einer ovalen Ansprechcharakteristik,

Figur 5 Zeitdiagramme von in der Schaltung nach Figur 4 auftretenden Strömen und Spannungen,

Figur 6 ovale Ansprechcharakteristiken,

Figur 7 ein Ausführungsbeispiel eines Impedanzrelais nach der Erfindung,

Figur 8 eine alternative Ausbildung der Eingangsschaltung.

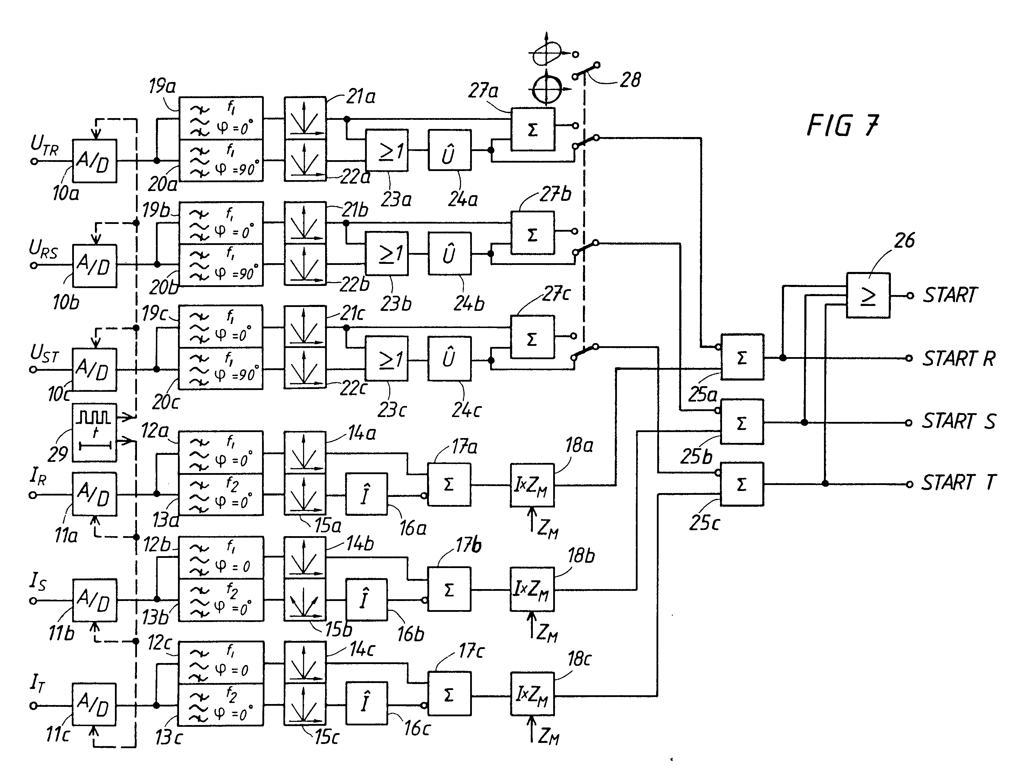

In dem in Figur 7 gezeigten Ausführungsbeispiel gemäss der Erfindung wird vorausgesetzt, dass die Spannungssignale $U_{TR}$, $U_{RS}$, und $U_{ST}$ sowie die Stromsignale $I_R$, $I_S$ und $I_T$ Signal- und Leistungsniveaus haben, die der digitalen Verarbeitung angepasst sind, die in einer Anordnung nach der Erfindung stattfinden. Ferner wird vorausgesetzt, dass die Ausgangssignale START, START R, START S und START T in Verstärkern derart verstärkt werden, dass sie eine Relais- und/oder eine Phasenwahlschaltung speisen können.

Wie aus Figur 7 hervorgeht, werden die analogen Spannungssignale $U_{TR}$, $U_{RS}$, und $U_{ST}$ in Analog-Digitalwandlern 10a, 10b und 10c in entsprechende digitale Werte umgewandelt. Auf gleiche Weise werden die analogen Stromsignale $I_R$, $I_S$ und $I_T$ in Analog-Digitalwandlern 11a, 11b und 11c in entsprechende digitale Werte umgewandelt.

Die Digitalisierung bedeutet, dass die analogen Signale in eine Impulsfolge umgewandelt werden, die aus einer bestimmten Anzahl Abtastungen pro Periode besteht, und dass die erfassten Werte als binäre Zahlen zur weiteren Verarbeitung bereitgestellt werden. Die Abtastfrequenz wird unter Berücksichtigung der Rechengeschwindigkeit des gewählten Systems und der Genauigkeit gewählt, die man beim Messen, Filtern usw. haben möchte.

Zu den Strommesskreisen gehören ausserdem digitale Grundwellenfilter 12a, 12b und 12c sowie digitale Filter 13a, 13b und 13c für die zweite Oberwelle. Die gefilterten Werte werden vollweggleichgerichtet, d.h. jede negative Abtastung wird durch Gleichrichter 14a, 14b, 14c bzw. 15a, 15b und 15c in positive Werte umgewandelt. Für die zweite Oberwelle wird in den Spitzenwertbildnern 16a, 16b und 16c der Spitzenwert ermittelt.

Beim Einschalten einer leerlaufenden Leitung oder eines leerlaufenden Transformators kann, wie oben erwähnt, ein sehr hoher Einschaltstrom mit einer starken zweiten Oberwelle auftreten. Der von den Spitzenwertbildnern 16a, 16b und 16c erhaltene Wert wird nun benutzt, das Relais bei einer solchen Einschaltung zu stabilisieren. Dies geschieht dadurch, dass der Spitzenwert der zweiten Oberwelle in den Summierungsgliedern 17a, 17b und 17c von dem Grundwellenwert subtrahiert wird. Die auf diese Weise stabilisierten Stromwerte werden in den Multiplikatoren 18a, 18b und 18c mit einer einstellbaren Modellimpedanz $Z_M$ multipliziert. Der so gewonnene Wert entspricht im Prinzip der Spannung $U_2$ in den Figu-ren 2 und 4.

Zu dem Spannungsmesskreis gehören Grundwellenfilter 19a, 19b und 19c sowie 20a, 20b und 20c. Die Filter 19a–19c liefern die Grundwelle in Phase mit dem Eingangssignal und die Filter 20a–20c liefern die Grundwelle mit einer Phasenverschiebung von 90 Grad gegenüber dem Eingangssignal. Die Ausgangssignale der Filter entsprechen dann dem Sinus- bzw. Cosinusteil der Grundwelle. Auf gleiche Weise wie bei der Strommessung erfolgt in den Gleichrichtern 21a, 21b, 21c bzw. 22a, 22b und 22c eine Vollweggleichrichtung der gefilterten Werte.

Wie bereits oben gesagt, hat eine Anordnung nach der Erfindung dieselbe prinzipielle Arbeitsweise wie die in der DE-A-20 22 150 beschriebene Anordnung. Dies bedeutet, dass zur Gewinnung der kreisförmigen Charakteristik gemäss Figur 3 ein digitaler Wert zugänglich sein muss, der dem Signal $U_1$ in Figur 2 oder dem Teil des Signals $U_1'$ in Figur 4 entspricht, dem der geglättete Strom $i_1$ entspricht. Dies wird dadurch erreicht, dass man einen gleitenden Mittelwert bildet, d.h. einen Mit-telwert aus mehreren aufeinanderfolgenden ge-messenen Spitzenwerten, wobei die Mittelwertbil-dung für jeden neuen gemessenen Spitzenwert aufdatiert wird. Da man sowohl von dem Sinuswie von dem Cosinusteil der Grundwelle und den Vollweggleichrichterwerten ausgeht, erhält man vier Mal pro Periode einen Spitzenwert. In einer Ausführungsform werden vier gemessene Spitzenwerte für die Mittelwertbildung gespart. Dies bedeutet, dass man während einer Periode einen gleitenden Mittelwert bildet. Die Genauigkeit in der Spitzenwertbestimmung ist, wie erwähnt, von der Anzahl der Abtastungen pro Periode abhängig.

Der gleitende Mittelwert wird mit Hilfe der ODER-Glieder 23a, 23b, 23c und der Spitzenwertbildner 24a, 24b und 24c gebildet.

Die Bildung eines Kriteriums für ein Ansprechen, d.h. für die Bereitstellung von START-Ausgangssignalen, wird in dieser Anordnung auch durch eine Nullerfassung durchgeführt.

Wenn der Strom multipliziert mit dem gemessenen $Z_M$-Wert grösser als der gleitende Mittelwert der Spannung ist, erhält man das Ansprechen über die Summierungsglieder 25a bis 25c. Wie aus Figur 7 hervorgeht, kann ausser einem direkten START-Signal für jede Phase ein gemeinsames Signal über ein ODER-Glied 26 gewonnen werden, wenn in einer Phase eine Unterimpedanz festgestellt wird.

Um eine ovale Ansprechcharakteristik gemäss der Kurve 9 in Figur 6 zu bekommen, ist ein Zugang zu einem Spannungsmesswert erforderlich, welcher der Spannung $U_1'$ gemäss Figur 5 ent-spricht. Dies wird in einer Anordnung gemäss der Erfindung dadurch erreicht, dass zu dem gleitenden Mittelwert in den Summierungsgliedern 27a–27c der Augenblickswert der Spannung in Gestalt der digitalen Werte der Grundwellenmessung der Spannung addiert wird, die von den Filtern 19 und den Gleichrichtern 21 geliefert werden. Die Umschaltung zwischen kreisförmiger und ovaler Charakteristik erfolgt durch einen Umschalter 28.

Um die langen Achsen der ovalen Ansprechkurven mit der X-Achse der Impedanzebene zur Dekkung zu bringen, ist es erforderlich, dass die Strom- und Spannungsabtastungen synchronisiert sind, d.h. dass sie in denselben Zeitpunkten vorgenommen werden. Um einen gewissen Neigungswinkel Alfa zwischen der langen Achse der Ansprechkurve und der X-Achse gemäss Figur 6 zu erhalten, werden die Stromabtastungen gegen-über den Spannungsabtastungen zeitlich verscho-ben. Diese Zeitverschiebung kann auf viele verschiedene Arten erreicht werden. Zum Beispiel können die Stromabtastungen gegenüber den Spannungsabtastungen durch ein in Figur 7 dargestelltes Glied 29 verzögert werden.

Wenn man beispielsweise acht Abtastungen pro Periode hat, so bewirkt eine Verschiebung um eine volle Abtastung eine Drehung entsprechend $\alpha = 45$ Grad. Um eine Neigung $\alpha = 70$ Grad zu bekommen, müssen die Stromabtastungen den Spannungsabtastungen um 20 Grad folgen, was bei acht Abtastungen pro Periode 20/360 mal 20 = 1,111 ms entspricht. Dadurch, dass man die Zeitdifferenz zwischen Spannungs- und Stromabtastung variiert, kann man auf diese Weise verschiedene Neigungen der langen Achse und damit der ovalen Charakteristiken erhalten.

Damit ein Impedanzschutz dieser Art zufriedenstellend arbeitet, sind gewisse zusätzliche Eigenschaften erforderlich. So ist es beispielsweise wünschenswert, den Rückkippwert des Impedanzschutzes so beeinflussen zu können, dass er etwas höher als der Ansprechwert ist. Dies kann beispielsweise auf einfache Weise dadurch erreicht werden, dass in den betreffenden START-Kreis ein eine Hysterese bildendes Glied eingeschaltet wird.

Um eine stabile und ruhige Arbeitsweise zu erhalten, kann in die START-Kreise ein zeitverzögerndes Glied eingefügt werden, um bei einem eventuellen Ansprechen sicherzustellen, dass dieser Zustand eine bestimmte einstellbare Zeit lang erhalten bleibt.

Gelegentlich besteht der Wunsch, ein Ansprechen zu verhindern, wenn der gemessene Strom unter einem vorgegebenen Wert liegt. Dies kann zweckmässigerweise dadurch erreicht werden, dass zwischen den Gliedern 17 und 18 $I_{MIN}$-Glieder eingeschaltet werden.

Zu einem vollständigen Impedanzschutz gehören im allgemeinen auch verschiedene Prüffunktionen, die einerseits die Eingangsstufen aussteuern, so dass man ein START-Signal in der gewählten Phase erhält, und andererseits ein Blockiersignal erzeugen.

Ferner ist es üblich, die Eigenschaften des Impedanzschutzes für ergänzende Funktionen zu verwenden.

Da der Impedanzschutz eine Strommessung durchführt, ist es sehr einfach, diese Messung für eine Überstromauslösung bei einem Strom zu verwenden, der ein bestimmtes Vielfaches des Nennstromes überschreitet.

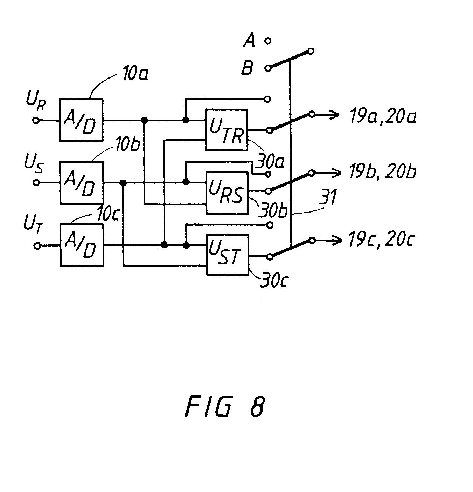

Es ist einfach, einen solchen Impedanzschutz mit einer Funktion für Nullpunktstrom zu vervollständigen. Die Strommessung, die Analog-Digitalwandlung usw. geschehen in gleicher Weise wie für die Impedanz-Schutzfunktion. Bei Nullpunktstrom wird der Spannungsmesskreis für Phasenspannungsmessung umgeschaltet. Einen alternativen Eingangskreis für das Impedanzrelais, der auch den Fall mit Funktion für Nullpunktstrom deckt, zeigt Figur 8. Hier werden Phasenspannungen $U_R$, $U_S$ und $U_T$ den Analog-Digitalwandlern 10a, 10b und 10c zugeführt. Wenn der Umschalter 31 die obere Lage A einnimmt, werden Phasenspannungen gemessen. Die verketteten Spannungen $U_{TR}$, $U_{RS}$ und $U_{ST}$ werden dann in den Gliedern 30a, 30b und 30c gebildet, wie z.B. die Differenzspannung zwischen der gerade vorhandenen Phase und der vorhergehenden Phase, indem man die Differenz der aktuellen Abtastungen der beiden Phasen bildet, welche die verkettete Spannung bilden. Wenn der Umschalter 31 in der gezeigten Lage B liegt, werden die verketteten Spannungen $U_{TR}$, $U_{RS}$ und $U_{ST}$ auf die Filter 19 und 20 geschaltet.

Die Anordnung kann auf viele ähnliche Arten mit einem kleineren oder grösseren Mass an Integration der Haupt-, Neben- und Ergänzungsfunktionen ausgeführt werden.

**Patentansprüche**

1. Digitales Impedanzrelais mit Analog-Digitalwandlern (10, 11) zur Digitalisierung von Messwerten für Netzspannungen ($U_{TR}$, $U_{RS}$, $U_{ST}$) und Phasenströme ($I_R$, $I_S$, $I_T$), mit Gliedern (12, 13, 19, 20) zum digitalen Filtern der Ausgangswerte der Analog-Digitalwandler, mit Gliedern (14, 15, 21, 22) zur digitalen Gleichrichtung der gefilterten Werte, mit einem die gefilterten gleichgerichteten Stromwerte verarbeitenden Stromkreis, der Multiplikatoren (18) für die Stromwerte enthält, mit einem die gefilterten gleichgerichteten Spannungswerte verarbeitenden Spannungskreis, der einerseits Glieder (23, 24) enthält zur Bildung der Spitzenwerte der genannten Spannungswerte, zur Bildung der digitalen Mittelwerte der genannten Spannungswerte aus einer Anzahl aufeinanderfolgender Spitzenwerte und zur Aufdatierung dieser digitalen Mittelwerte für jeden neu gebildeten Spitzenwert, und andererseits digitale Summierungsglieder (27) enthält zur Summierung der Mittelwerte und der gefilterten und gleichgerichteten Augenblickswerte der Netzspannungen, und mit Summierungsgliedern (25) zur Bildung der Differenz aus den abgegebenen digitalen Werten des Stromkreises und des Spannungskreises.

2. Impedanzrelais nach Anspruch 1, dadurch gekennzeichnet, dass ein Glied (29) zur Zeitverzögerung der digitalen Impulsfolge des Stromkreises gegenüber der digitalen Impulsfolge der Spannungskreise vorhanden ist.

3. Impedanzrelais nach einem der vorhergehenden Ansprüche, dadurch gekennzeichnet, dass Glieder (13, 15) zur Bildung einer digitalen Impulsfolge vorhanden sind, die der zweiten Oberwelle der Phasenströme entspricht.

4. Impedanzrelais nach einem der vorhergehenden Ansprüche, dadurch gekennzeichnet, dass Glieder (17) vorhanden sind zur Bildung der Differenz aus den den aktuellen Phasenströmen entsprechenden digitalen Impulsfolgen und den der zweiten Oberwelle der Phasenströme entsprechenden digitalen Impulsfolgen.

5. Impedanzrelais nach Anspruch 4, dadurch gekennzeichnet, dass ein Glied (18) zur Bildung des Produktes aus den in Anspruch 4 genannten Differenzen und einem einer Modellimpedanz ($Z_M$) entsprechenden Wert.

6. Impedanzrelais nach einem der Ansprüche 1 oder 5, dadurch gekennzeichnet, dass Glieder (25) vorhanden sind zur Erfassung des Nullwertes der Differenz aus den Impulsfolgeabtastungen der Stromkreise und den Impulsfolgeabtastungen der Spannungskreise.

**Claims**

1. Digital impedance relay with analog-digital converters (10, 11) for digitalization of measurement values of network voltages ($U_{TR}$, $U_{RS}$ and $U_{ST}$) and phase currents ($I_R$, $I_S$ and $I_T$) with members (12, 13, 19, 20) for digital filtering of the output signals of the analog-digital converters, with members (14, 15, 21, 22) for digital rectification of the filtered values, with a current circuit for processing the filtered and rectified current values, which current circuit comprises multipliers (18) for the current values, with a voltage circuit for processing the filtered and rectified voltage values, which voltage circuit comprises, on the one hand, members (23, 24) for forming the peak values of said voltage values to form the digital mean values of said voltage values from a number of successive peak values and for updating these digital mean values for each newly formed peak value, and, on the other hand, comprises digital summation devices (27) for the summation of the mean values and the filtered and rectified instantaneous values of the network voltages, and with summation devices (25) to form the difference between the delivered digital values of the current circuits and the voltage circuits.

2. Impedance relay according to Claim 1, characterized in that there is a time-delay unit (29) to delay the digital pulse sequence of the current circuits in relation to the digital pulse sequence of the voltage circuits.

3. Impedance relay according to any of the preceding Claims, characterized in that there are members (13, 15) to form a digital pulse sequence corresponding to the second harmonic in the phase currents.

4. Impedance relay according to any of the preceding Claims, characterized in that there are members (17) to form the difference between the digital pulse sequences corresponding to the actual phase currents and the digital pulse sequences corresponding the second harmonic in the phase currents.

5. Impedance relay according to Claim 4, characterized in that there is a member (18) for forming the product of the difference defined in Claim 4 and a value corresponding to a model impedance ($Z_M$).

6. Impedance relay according to any of Claims 1 or 5, characterized in that there are members (25) to detect the zero value in the difference between the pulse sequence samples of the current circuits and the pulse sequence samples of the voltages circuits.

### Revendications

1. Relais à impédance numérique comprenant des convertisseurs analogique-numérique (10, 11) pour numériser des valeurs mesurées de tensions de secteur ($U_{TR}$, $U_{RS}$, $U_{ST}$) et de courants de phase ($I_R$, $I_S$, $I_T$), des éléments (12, 13, 19, 20) pour le filtrage numérique des valeurs de sortie des convertisseurs analogique-numérique, des éléments (14, 15, 21, 22) pour le redressement numérique des valeurs filtrées, un circuit de courant, traitant les valeurs de courant filtrées et redressées et qui contient des multiplicateurs (18) pour les valeurs de courant, un circuit de tension, traitant les valeurs de tension filtrées et redressées et qui contient d'une part des éléments (23, 24) pour la formation des valeurs de crête desdites valeurs de tension, en vue de la formation des valeurs numériques moyennes desdites valeurs de tension à partir d'un certain nombre de valeurs de crête successives et en vue de l'actualisation de ces valeurs numériques moyennes pour chaque valeur de crête nouvellement formée, et d'autre part des éléments numériques de sommation (27) pour la sommation des valeurs moyennes et des valeurs instantanées, filtrées et redressées, des tensions de secteur, ainsi que des éléments de sommation (25) pour la formation de la différence entre les valeurs numériques délivrées par le circuit de courant et les valeurs numériques délivrées par le circuit de tension.

2. Relais selon la revendication 1, caractérisé en ce qu'il comprend un élément (29) pour retarder dans le temps la suite d'impulsions numérique du circuit de courant par rapport à la suite d'impulsions numérique des circuits de tension.

3. Relais selon une des revendications précédentes, caractérisé en ce qu'il comprend des éléments (13, 15) pour la formation d'une suite d'impulsions numérique correspondant à l'harmonique 2 des courants de phase.

4. Relais selon une des revendications précédentes, caractérisé en ce qu'il comprend des éléments (17) pour la formation de la différence entre les suites d'impulsions numériques correspondant aux courants de phase actuels et les suites d'impulsions numériques correspondant à l'harmonique 2 des courants de phase.

5. Relais selon la revendication 4, caractérisé en ce qu'il comprend un élément (18) pour former le produit des différences mentionnées dans la revendication 4 et d'une valeur correspondant à une impédance modèle ($Z_M$).

6. Relais selon la revendication 1 ou 5, caractérisé en ce qu'il comprend des éléments (25) pour détecter la valeur nulle de la différence entre les échantillonnages donnant les suites d'impulsions des circuits de courant et les échantillonnages donnant les suites d'impulsions des circuits de tension.

FIG 1

FIG 2

FIG 3

EP 0 150 814 B1

FIG 4

FIG 5

FIG 6

FIG 7

FIG 8